# EUROPÄISCHE PATENTANMELDUNG

(11) **EP 3 569 308 A1**
(43) Veröffentlichungstag der Anmeldung: **20.11.2019**
(21) Anmeldenummer: 18173229.8
(22) Anmeldetag: 18.05.2018
(51) Int. Cl.: B01J 20/10, B01J 20/30, B01J 35/02, C01B 17/79, B01J 20/28

(54) **FORMKÖRPER IN FORM VON MULTILOBEN**

(71) Anmelder: BASF SE, 67056 Ludwigshafen am Rhein (DE)
(72) Erfinder: UNGELENK, Jan, 67056 Ludwigshafen (DE); WALSDORFF, Christian, 67056 Ludwigshafen (DE); KENNEMA, Marco Oskar, 67056 Ludwigshafen (DE); WAGNER, Matthias Johannes, 67056 Ludwigshafen (DE); SCHUBE, Bernd, 67056 Ludwigshafen (DE); KOCH, Benjamin, 67056 Ludwigshafen (DE)
(74) Vertreter: Schuck, Alexander

(57) **Zusammenfassung**

Die Erfindung betrifft Katalysator-, Katalysatorträger- oder Adsorbensformkörper in Form eines Multiloben mit n hohlzylindrischen Ausbuchtungen und a longitudinalen Durchgängen, wobei a = bn + 1 ist und b = 1,5 bis 2 ist. Die Katalysatorformkörpern finden Verwendung in der Oxidation von SO₂ zu SO₃. Insofern bezieht sich die Erfindung auch auf ein Verfahren zur Oxidation von SO₂ zu SO₃, bei dem ein Sauerstoff und Schwefeldioxid enthaltendes Gasgemisch bei einer Temperatur im Bereich von 340 bis 680°C mit einer Schüttung aus vanadiumhaltigen Katalysatorformkörpern in Kontakt gebracht wird.

## Beschreibung

Die Erfindung betrifft Katalysator-, Katalysatorträger- und Adsorbensformkörper mit neuer Formkörpergeometrie.

Katalysatorformkörper können als Trägermaterial beispielsweise Metallaluminate, Diatomeenerde, Siliziumdioxid, Titandioxid, Zirkoniumdioxid oder Mischungen daraus als Trägermaterialien enthalten. Sie können ein oder mehrere Metalle, ausgewählt aus der Gruppe bestehend aus Na, K, Rb, Cs, Mg, Ca, Ba, Al, Si, Ti, V, Cr, Mn, Fe, Co, Ni, Cu, Zn, Y, Zr, Nb, Mo, Ru, Rh, Pd, Ag, Sn, Sb, La, Hf, W, Re, Ir, Pt, Au, Pb, Bi und Ce, als Aktivmaterial enthalten. Die Katalysatorformkörper können durch Extrusion eines Katalysatorvorläufermaterials, das bereits das Aktivmaterial enthält, oder Extrusion des Trägermaterials und anschließende Imprägnierung des Trägers mit dem Aktivmaterial hergestellt werden.

Katalysatoren mit der erfindungsgemäßen Formkörpergeometrie können beispielsweise in Verfahren für die Oxidation von SO₂ zu SO₃, für Syngas-Reaktionen, Hydrier-Reaktionen oder für Partialoxidationen wie beispielsweise in Verfahren zur Herstellung von Ethylenoxid verwendet werden. Die Erfindung betrifft auch ein Verfahren zur Oxidation von SO₂ zu SO₃ unter Verwendung der Katalysatorformkörper.

Heutige kommerzielle Katalysatoren für die Oxidation von SO₂ zu SO₃ enthalten üblicherweise neben Vanadium auch Alkalimetallverbindungen, vor allem Kaliumverbindungen aber gegebenenfalls auch Natriumverbindungen und/oder Cäsiumverbindungen, sowie Sulfat. Als Träger für die zuvor erwähnten Komponenten werden üblicherweise poröse Oxide verwendet, wie insbesondere Siliziumdioxid, SiO₂ bevorzugt in Form von Kieselgur. Unter Reaktionsbedingungen bildet sich auf dem Trägermaterial eine Alkalipyrosulfatschmelze aus, in welcher die Aktivkomponente Vanadium in Form von Oxosulfat-Komplexen gelöst wird (Catal. Rev. - Sci. Eng., 1978, Bd. 17(2), Seiten 203 bis 272). Man spricht von einem supported liquid phase catalyst.

Die Gehalte an Vanadium, berechnet als V₂O₅, liegen meist zwischen 3 und 10 Gew.-%, die Gehalte an Alkalimetallen (M), berechnet als M₂O, bei 5 bis 30 Gew.-%, wobei das molare Verhältnis von Alkalimetall zu Vanadium (M/V Verhältnis) üblicherweise zwischen 2 und 6 liegt. Der Gehalt an Kalium, berechnet als K₂O, liegt üblicherweise zwischen 6 und 15 Gew.-% und an Sulfat zwischen 12 und 30 Gew.-%. Daneben wurde über die Verwendung zahlreicher weiterer zusätzlicher Elemente berichtet, wie beispielsweise Chrom, Eisen, Aluminium, Phosphor, Mangan und Bor. Als poröses Trägermaterial wird überwiegend SiO₂ eingesetzt.

Die Herstellung derartiger Katalysatoren im industriellen Maßstab erfolgt üblicherweise durch Vermischen wässriger Lösungen bzw. Suspensionen der verschiedenen Aktivkomponenten, beispielsweise entsprechender Vanadiumverbindungen (V₂O₅, Ammoniumpolyvanadat, Ammoniummetavanadat, Alkalimetallvanadate bzw. Vanadylsulfate) mit Alkalimetallsalzen (Nitraten, Carbonaten, Oxiden, Hydroxiden, Sulfaten), unter Umständen mit Schwefelsäure und sonstigen Komponenten, welche als Porenbildner bzw. Schmiermittel fungieren können, wie beispielsweise Schwefel, Stärke oder Graphit, mit dem Trägermaterial. Die daraus resultierende Masse wird im nächsten Schritt zu den gewünschten Formkörpern verarbeitet und schließlich thermisch behandelt (Trocknung und Kalzinierung).

US 4,485,190 beschreibt die Herstellung eines Katalysators für die Oxidation von SO₂ zu SO₃ enthaltend V, K und eine Siliziumoxid-Verbindung. Als Formkörper werden in Spalte 2, Zeilen 30 ff. und Spalte 5, Zeilen 62 ff. unter anderem Triloben genannt. In Spalte 6, Zeilen 5 ff. wird gesagt, dass Triloben eine um 18 % größere Oberfläche haben, ohne dass weitere Angaben zur Größe der miteinander verglichenen Formkörper gemacht werden. Die Form der erwähnten Trilobe wird nicht näher angegeben. Triloben mit Durchgängen werden nicht erwähnt. In den Ausführungsbeispielen werden keine Triloben hergestellt.

DE 689 19 235 T2 beschreibt einen Katalysator zur Oxidation von SO₂ zu SO₃ enthaltend Vanadium, Kalium und eine Siliziumoxid-Verbindung. Als Formkörper werden auf Seite 2, Zeilen 2 ff. hohle oder kompakte Zylinder, mehrfach gelappte Zylinder, gegebenenfalls mit spiralförmigen Vertiefungen, vorgeschlagen. Andere Formen werden nicht beschrieben.

EP 464 633 A1 beschreibt einen Träger für einen Katalysator für die Herstellung von ungesättigten Estern. Als mögliche Träger sind in den Abbildungen 4 und 5 Trilobe mit drei Durchgängen und in den Abbildungen 6 und 7 Formkörper mit mehr als drei Durchgängen offenbart. In den Ausführungsbeispielen werden nur Formkörper mit einer Bohrung beschrieben.

EP 0 129 903 A2 offenbart die Herstellung eines Katalysators für die Oxidation von Schwefeldioxid zu Schwefeltrioxid enthaltend Vanadium und ein Alkalimetall auf einem Silikatträger. Gemäß Beispiel 3 wird ein Katalysator in Form von Hohlsträngen mit 10 mm Außendurchmesser und 5 mm Innendurchmesser hergestellt.

EP 0 020 963 A2 offenbart einen Katalysator zur Oxidation von Schwefeldioxid zu Schwefeltrioxid enthaltend Vanadium- und Alkalimetallverbindungen auf einem Silikatträger in Form von Strängen mit sternförmigem Querschnitt mit 4 bis 6 Zacken.

EP 0 732 146 A1 offenbart Katalysatorformkörper für die Oxidation von Methanol zu Formaldehyd in Form von Triloben mit drei Durchgängen.

In US 5,330,958 A werden Katalysatoren in Form von Triloben mit drei Durchgängen, niedrigem Druckverlust und hohem Oberflächen- zu Volumen-Verhältnis beschrieben.

EP 0 355 664 betrifft einen Katalysator für die Oxidation und Ammonoxidation von alpha-, betaungesättigten Kohlenwasserstoffen in Form eines 3- bis 5-speichigen Rades oder einer Rosette.

WO 2010/072723 A2 offenbart einen Katalysatorformkörper zur Herstellung von Maleinsäureanhydrid enthaltend Vanadium und Phosphor in Form eines Zylinders mit vier Innenbohrungen. Die Achsen der Innenbohrungen liegen äquidistant auf einem zum Umfang des Zylinders konzentrischen Kreis.

DE 692 20 225 T2 beschreibt Katalysatoren in Form von Triloben mit 3 Durchgängen, insbesondere für die Herstellung von Formaldehyd. Die Katalysatoren werden in den Beispielen durch Tablettierung gewonnen und haben eine definierte Länge. Als vorteilhafte Eigenschaft werden eine hohe tatsächliche Oberfläche pro Volumen und ein geringer Druckverlust genannt.

DE 696 35 919 T2 beschreibt Katalysatoren in Form von Triloben mit Durchgängen, insbesondere für die Herstellung von Formaldehyd, die durch Extrusion oder Tablettierung hergestellt werden können. In den Ausführungsbeispielen werden die Katalysatoren durch Tablettierung hergestellt und weisen eine definierte Länge auf.

US 2009/0306410 A1 beschreibt Katalysatoren in Form von Triloben mit 3 Durchgängen, insbesondere für die Herstellung von Maleinsäureanhydrid. Die Katalysatoren werden in den Beispielen durch Tablettierung gewonnen und haben eine definierte Länge. Als vorteilhafte Eigenschaften werden eine hohe tatsächliche Oberfläche pro Volumen und ein geringer Druckverlust genannt.

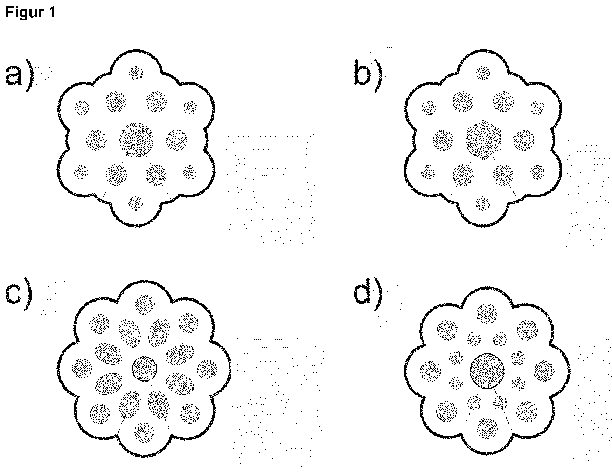

EP 417 722 A1 beschreibt Katalysatoren zur Herstellung von ungesättigten Aldehyden. Als Beispiele werden in Figur 1 Formkörper mit 3 bzw. 4 Durchgängen gezeigt. In Beispiel 4 werden Formkörper mit 3 Durchgängen durch Extrusion erhalten und bei einer Länge von 5 mm abgeschnitten. Für die Formkörper werden eine geometrische Oberfläche pro Volumen sowie der Druckverlust angegeben.

WO2010/029324 A1 offenbart einen Katalysatorformkörper in Form eines Zylinders mit fünf durchgehenden Bohrungen in einer pentagonalen Anordnung oder einer Quincux-Anordnung, wobei der Zylinder am Umfang fünf bzw. vier durchgehende halbreisförmige Rillen aufweist. Die Rillen weisen scharfe Kanten auf, die abbrechen und dadurch erhöhten Abrieb verursachen können.

CN 102688784 A zeigt flache, scheibenförmige Katalysatorformkörper umfassend Silber auf einem Aluminiumoxid-Träger. Diese weisen die Form von Triloben, Tetraloben und Pantaloben mit zentralem Durchgang auf. Der zentrale Durchgang ist größer als die peripheren Durchgänge.

WO 2016/156042 offenbart Katalysatorformkörper für die Oxidation von SO₂ zu SO₃ in Form von Tetraloben mit vier Durchgängen. Die Formkörper weisen eine um 27% höhere spezifische Oberfläche bei nur 15% höherem Druckverlust gegenüber Formkörpern mit Sternstrang-Form auf. Verglichen mit entsprechenden Triloben mit drei Durchgängen weisen die Tetraloben einen deutlich geringeren Druckverlust auf. Die Schneidhärte ist höher, der Abrieb geringer als bei Sternensträngen.

Die Formkörper werden durch Extrusion geeigneter Vorläufermassen durch ein entsprechendes Extrusionswerkzeug, Trocknen und Kalzinieren der Extrudate hergestellt. Für die Herstellung ist eine hohe Seitendruckfestigkeit der noch feuchten, frisch extrudierten Formkörper sowie der getrockneten und kalzinierten Formkörper wichtig.

Aufgabe der Erfindung ist es, Formkörper, insbesondere für die Oxidation von SO₂ zu SO₃ bereitzustellen, die eine möglichst große volumenspezifische geometrische Oberfläche bei möglichst geringem Druckverlust bewirken.

Gelöst wird die Aufgabe durch Katalysator-, Katalysatorträger- oder Adsorbensformkörper in Form von Multiloben mit n hohlzylindrischen Ausbuchtungen und a longitudinalen Durchgängen, wobei a = bn +1 ist und b = 1,5 bis 2 ist.

Durch neuartige Fertigungstechniken für Extrusionsdüsen, insbesondere 3D-MetallpulverDruck, sind nunmehr Extrusionsdüsen mit komplexer dreidimensionaler Geometrie einfacher zugänglich. Diese ermöglichen die praktische Herstellung von erfindungsgemäßen Formkörpern mit entsprechend komplexer Geometrie. Diese zeichnen sich durch zahlreiche Durchgänge und damit durch eine große volumenspezifische geometrische Oberfläche aus.

Multiloben im Sinne der Erfindung sind zylindrische Formkörper mit einer Mehrzahl von hohlzylindrischen Ausbuchtungen. Gängige Formen sind Triloben mit 3 hohlzylindrischen Ausbuchtungen oder Tetraloben mit 4 hohlzylindrischen Ausbuchtungen. Man spricht in diesem Zusammenhang auch von einer dreiblättrigen oder vierblättrigen Kleeblattform. Erfindungsgemäße Formkörper weisen vorzugsweise mehr als 4 hohlzylindrische Ausbuchtungen auf, es handelt sich also beispielsweise um Penta-, Hexa-, Hepta- und Octaloben. Im Allgemeinen beträgt die Zahl n der hohlzylindrischen Ausbuchtungen 3 bis 24, bevorzugt 5 bis 10, besonders bevorzugt 6 bis 8. Insbesondere bevorzugt weisen die Formkörper n = 6 oder 8 hohlzylindrische Ausbuchtungen auf.

Die Erfindung wird unter Bezugnahme auf die Figuren 1 bis 8 näher erläutert.
Die Figuren 1 bis 5 zeigen verschiedene spezielle Ausführungsformen der erfindungsgemäßen Formkörper.

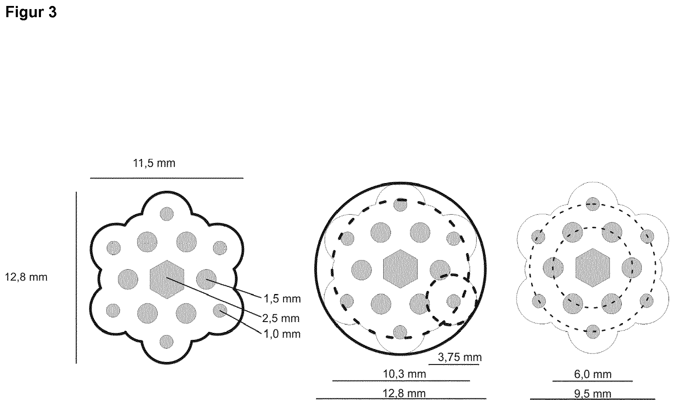

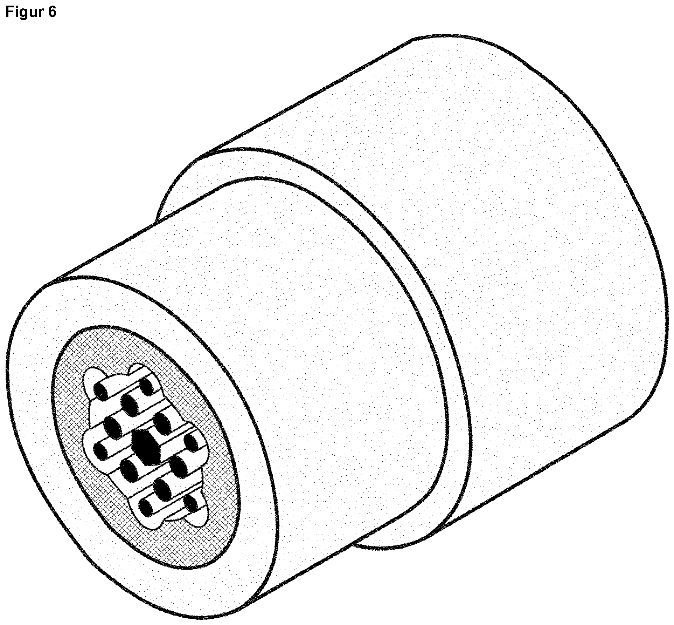

Figur 6 zeigt eine zur Extrusion eines Formkörpers gemäß Figur 3 geeignete Extrusionsmatrize in einer 3D-Darstellung.

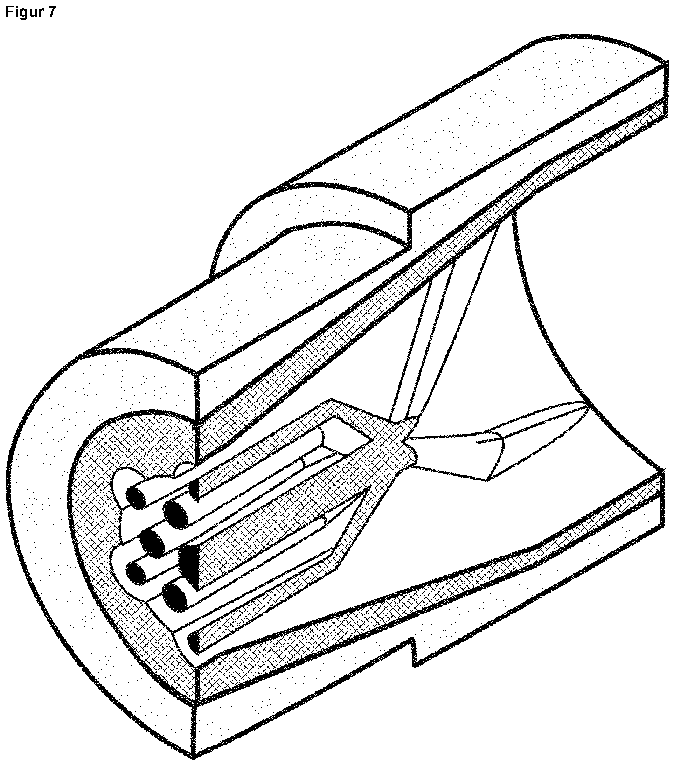

Figur 7 zeigt eine Extrusionsmatrize gemäß Figur 6 in einer 3D-Schnittdarstellung.

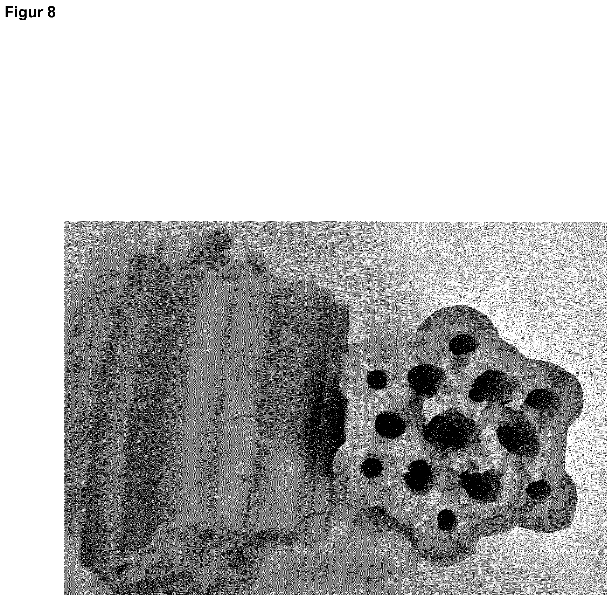

Figur 8 ist eine fotografische Darstellung eines mit der Extrusionsmatrize gemäß den Figuren 6 und 7 extrudierten Formkörpers.

Figur 1a) zeigt einen erfindungsgemäßen Katalysatorformkörper mit ausschließlich kreisrunden Durchgängen, wobei die inneren Durchgänge größer die äußeren Durchgänge sind und jeweils kreisförmig um einen größten zentralen Durchgang angeordnet sind. Figur 1b) zeigt einen erfindungsgemäßen Katalysatorformkörper mit einem zentralen sechseckigen Durchgang sowie kreisrunden inneren und äußeren Durchgängen. Figur 1c) zeigt einen erfindungsgemäßen Formkörper mit einem zentralen kreisrunden Durchgang, inneren ovalen Durchgängen und äußeren kreisrunden Durchgängen. Figur 1d) zeigt ebenfalls einen erfindungsgemäßen Katalysatorformkörper mit ausschließlich kreisrunden Durchgängen, wobei die inneren Durchgänge kleiner als die äußeren Durchgänge sind und jeweils kreisförmig um einen größten zentralen Durchgang angeordnet sind.

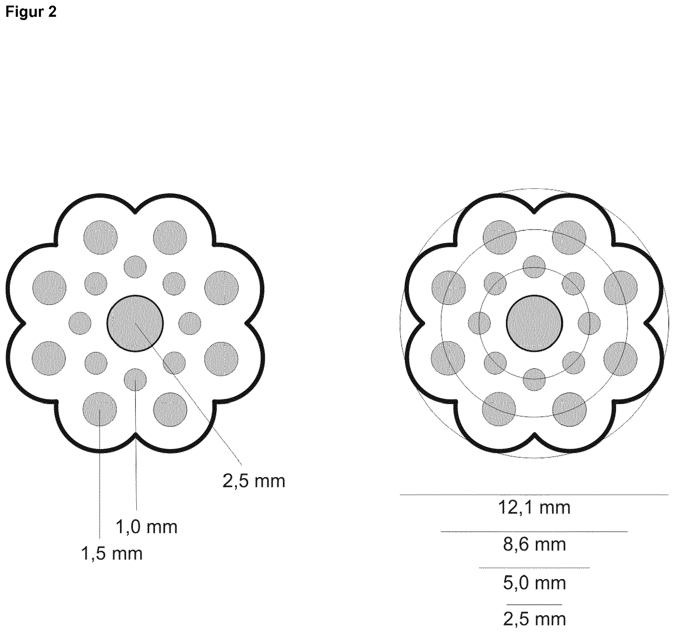

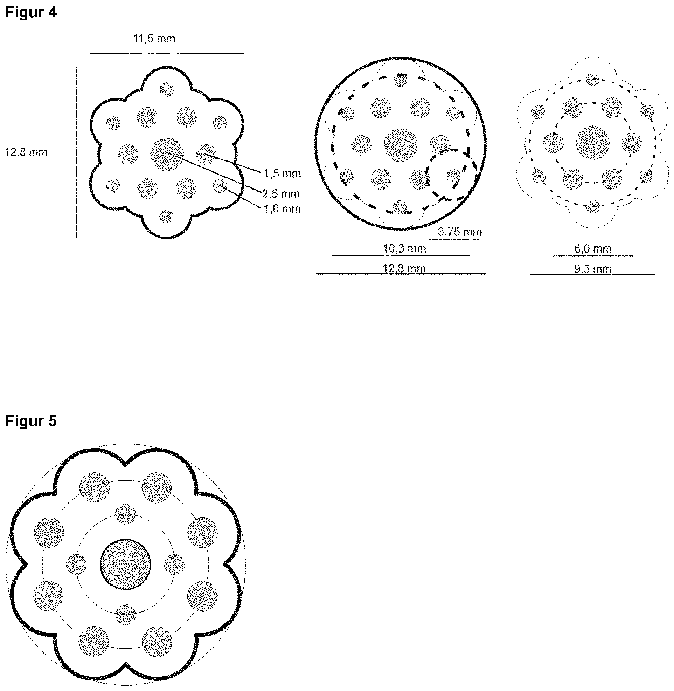

Figur 2 zeigt beispielhaft konkrete Abmessungen der in Figur 1d) dargestellten speziellen Ausführungsform. Figur 3 zeigt beispielhaft konkrete Abmessungen der in Figur 1b) dargestellten speziellen Ausführungsform. Figur 4 zeigt beispielhaft konkrete Abmessungen der in Figur 1a) dargestellten speziellen Ausführungsform.

Wie in den Figuren 2 und 3 weiterhin gezeigt, kann man sich den Umfang der Multiloben durch Überlagerung von kleinen Kreisen mit dem Durchmesser y1 und einem großen Kreis mit dem Durchmesser y2 zusammengesetzt denken. Im Querschnitt werden die hohlzylindrischen Ausbuchtungen durch Kreisbögen begrenzt, die Segmente der kleinen Kreise mit dem Durchmesser y1 sind. Diese liegen auf einem Kreis mit dem Durchmesser y2. Der Umfang der Formkörper wird von einem Kreis mit dem Durchmesser y3 umschrieben. In den in den Figuren 2 und 3 gezeigten Ausführungsformen ist y1 = 3,75 mm, y2 = 10,3 mm und y3 = 12,8 mm.

Die erfindungsgemäßen Formkörper weisen eine Anzahl a von longitudinalen Durchgängen auf, das heißt Durchgänge, die zur Formkörperachse im Wesentlichen parallel sind. Erfindungsgemäß weisen die Formkörper sowohl äußere als auch innere Durchgänge auf, wobei die äußeren Durchgänge Teil der hohlzylindrischen Ausbuchtungen sind.

Vorzugsweise liegen, wie in Figur 2b hervorgehoben, alle inneren Durchgänge auf der gleichen inneren Kreislinie mit dem Durchmesser x1 und liegen alle äußeren Durchgänge auf der gleichen äußeren Kreislinie mit dem Durchmesser x2, wobei die Formkörperachse den Mittelpunkt der Kreislinien bildet. Weiterhin weist der Katalysatorformkörper einen zentralen Durchgang auf. In der in Figur 2 gezeigten speziellen Ausführungsform ist x1 = 5,0 mm und x2 = 8,6 mm.

Liegen, wie in den Figuren 1 bis 4 gezeigt, zwischen je 2 benachbarten äußeren Durchgängen ein innerer Durchgang, so ist b = 2, die Zahl der inneren und äußeren Durchgänge ist jeweils n und die Anzahl a der longitudinalen Durchgänge beträgt insgesamt a = 2n + 1. Die Zahl der inneren Durchgänge kann aber auch geringer sein. Ist beispielsweise, wie in der in Figur 5 dargestellten Ausführungsform, nur jeder zweite innere Durchgang vorhanden, dann ist b = 1,5.

Bevorzugt sind Formkörper, in denen b = 2 ist.

Bevorzugt sind Formkörper die einen zentralen Durchgang, auf einer Kreislinie mit dem Durchmesser x1 liegenden innere Durchgänge und auf einer Kreislinie mit dem Durchmesser x2 liegende äußere Durchgänge aufweisen.

Das Verhältnis der Durchmesser x2 : x1 liegt im Allgemeinen im Bereich von 1,8 : 1 bis 1,4 : 1, bevorzugt von 1,5 : 1 bis 1,7 : 1.

Besonders bevorzugt sind solche Formkörper, die n innere und n äußere Durchgänge und eine n-zählige Rotationssymmetrie aufweisen, insbesondere bevorzugt sind solche, die zur Punktgruppe Cnv gehören. Dabei ist zu berücksichtigen, dass sich diese Symmetrieeigenschaften auf die idealen Formkörper beziehen, während in der Realität extrudierte Formkörper durch Quetschungen, Biegungen oder Risse davon abweichen können.

Im Allgemeinen beträgt die Wandstärke der hohlzylindrischen Ausbuchtungen das 0,4- bis 1,2-fache, bevorzugt das 0,45- bis 1,1-fache des Durchmessers der äußeren Durchgänge.

Die longitudinalen Durchgänge können beispielsweise einen kreisrunden, einen elliptischen, einen sternförmigen, einen polygonalen, beispielsweise einen dreieckigen, quadratischen, rautenförmigen, pentagonalen oder hexagonalen Querschnitt aufweisen. Die Querschnitte der Durchgänge können alle die gleiche Form aufweisen, beispielsweise alle kreisrund sein, oder verschiedene Formen aufweisen.

Die longitudinalen Durchgänge können alle kreisrund sein. Entsprechende Ausführungsformen sind in den Figuren 1a), 1d), 2, 4 und 5 gezeigt.

Die longitudinalen Durchgänge können alle gleichgroß sein oder verschiedene Größen aufweisen. Beispielsweise können die inneren Durchgänge kleiner als die äußeren Durchgänge sein oder umgekehrt. Mit Größe der Durchgänge ist die Querschnittsfläche der Durchgänge gemeint.

In bestimmten Ausführungsformen weisen die inneren Durchgänge jeweils eine kleinere Fläche als die äußeren Durchgänge auf. Solche Ausführungsformen sind in den Figuren 1d) und 2 gezeigt.

In weiteren Ausführungsformen weisen die inneren Durchgänge jeweils eine größere Fläche als die äußeren Durchgänge auf. Solche Ausführungsformen sind in den Figuren 1a), 1b), 1c), 3, 4 und 5 gezeigt.

In bevorzugten Ausführungsformen sind die äußeren Durchgänge kreisrund. Dies trifft auf die in den Figuren 1 bis 5 gezeigten Ausführungsformen zu.

In weiteren bevorzugten Ausführungsformen sind die inneren Durchgänge kreisrund oder elliptisch. Dies trifft ebenfalls auf die in den Figuren 1 bis 5 - bis auf Figur 1c - gezeigten Ausführungsformen zu. In der in Figur 1c) gezeigten Ausführungsform sind die inneren Durchgänge elliptisch.

In weiteren Bevorzugten Ausführungsformen ist der zentrale Durchgang kreisrund oder polygonal. In den in den Figuren 1b) und 3 gezeigten Ausführungsformen ist der zentrale Durchgang hexagonal. Im Allgemeinen ist der zentrale Durchgang der größte Durchgang.

Im Allgemeinen beträgt das Verhältnis des Durchmessers des Formkörpers zur Höhe des Formkörpers von 0,25 bis 2,0, bevorzugt von 0,25 bis 1,0 und besonders bevorzugt von 0,4 bis 0,75. Im Allgemeinen beträgt der Durchmesser des Formkörpers von 5 bis 80 mm, bevorzugt von 10 bis 20 mm und besonders bevorzugt von 10 bis 15 mm.

Erfindungsgemäße Katalysatorformkörper zur Oxidation von SO₂ zu SO₃ sind durch Extrusion einer entsprechenden Katalysatorvorläufermasse, umfassend Vanadium, mindestens ein Alkalimetall und Sulfat auf einem Siliziumdioxid-Trägermaterial, durch ein Extrusionswerkzeug, das die Geometrie des Formkörper-Querschnitts abbildet, Trocknung und Calcinierung der extrudierten Vorläufer-Formkörper herstellbar.

Die erfindungsgemäßen Formkörper können auch durch Tablettierung hergestellt werden. Dabei lassen sich aber bevorzugt Formkörper herstellen, die nicht wesentlich höher als breit sind.

Die Idealform der erfindungsgemäßen Formkörper wird durch die Geometrie des Extrusionswerkzeugs, durch das die Katalysatorvorläufermasse extrudiert wird, definiert. Im Allgemeinen weicht die Geometrie realer extrudierter Formkörper von dieser Idealform ab, wobei die realen Formkörper jedoch im Wesentlichen die oben beschriebenen geometrischen Merkmale aufweisen. Im Allgemeinen verlaufen die Achsen der hohlzylindrischen Ausbuchtungen parallel. Die realen Formkörper können jedoch beispielsweise in z-Richtung leicht gekrümmt sein. Die Durchgänge der erfindungsgemäßen Formkörper können beispielsweise von einer perfekten Kreisform abweichen. Liegt eine große Zahl realer Formkörper vor, so können bei einigen wenigen Formkörpern einzelne Durchgänge verschlossen sein. Im Allgemeinen ist die Stirnfläche der Formkörper in der xy-Ebene, bedingt durch den Produktionsprozess, keine glatte Fläche, sondern mehr oder weniger unregelmäßig. Die Länge der Formkörper in z-Richtung (maximale Ausdehnung in z-Richtung) ist im Allgemeinen nicht für alle Formkörper gleich, sondern weist eine Verteilung auf, die durch eine Durchschnittslänge z (arithmetischer Mittelwert) gekennzeichnet ist.

Das Verfahren zur Herstellung von erfindungsgemäßen Katalysatorformkörpern zur Oxidation von SO₂ zu SO₃ umfassend Vanadium, mindestens ein Alkalimetall und Sulfat auf einem Silikat-Trägermaterial, beinhaltet die Extrusion einer Katalysatorvorläufermasse, umfassend Vanadium, mindestens ein Alkalimetall und Sulfat auf einem Silikat-Trägermaterial, durch die Öffnung eines Extrusionswerkzeugs, dessen Querschnitt die Katalysatorformkörpergeometrie abbildet.

Im Allgemeinen enthalten die Katalysatoren neben Vanadium auch Alkalimetallverbindungen, vor allem Kaliumverbindungen aber gegebenenfalls auch Natriumverbindungen und/oder Cäsiumverbindungen, sowie Sulfat. Als Träger für die zuvor erwähnten Komponenten werden poröse Oxide verwendet wie Siliziumdioxid, SiO₂.

Als inerte Trägermaterialien werden vor allem poröse Materialien auf der Basis von SiO₂ eingesetzt. Dabei können synthetische Varianten von SiO₂ als auch natürliche Formen von SiO₂ oder deren Mischungen eingesetzt werden.

Der Gehalt an Vanadium, berechnet als V₂O₅, beträgt im Allgemeinen 3 bis 10 Gew.-%, der Gehalt an Alkalimetallen (M), berechnet als M₂O, 5 bis 30 Gew.-%, wobei das molare Verhältnis von Alkalimetall zu Vanadium (M/V Verhältnis) üblicherweise zwischen 2 und 6 liegt. Der Gehalt an Kalium, berechnet als K₂O, liegt üblicherweise zwischen 6 und 15 Gew.-% und der Gehalt an Sulfat zwischen 12 und 30 Gew.-%. Daneben können weitere Elemente enthalten sein, wie beispielsweise Chrom, Eisen, Aluminium, Phosphor, Mangan und Bor.

Ein bevorzugtes Trägermaterial enthält natürlich vorkommende Diatomeenerde. Besonders bevorzugt enthält das Trägermaterial mindestens zwei verschiedene natürlich vorkommende, nicht kalzinierte Diatomeenerden, welche sich im Strukturtyp der ihnen zugrundeliegenden Kieselalgen unterscheiden, wobei die verschiedenen Strukturtypen ausgewählt sind aus tellerförmigen, zylinderförmigen und stäbchenförmigen Strukturtypen.

Die daraus hergestellten Katalysatoren verfügen über eine besonders gute mechanische Stabilität.

Bevorzugte Diatomeenerden sollten einen Gehalt an Aluminiumoxid Al₂O₃ von kleiner als 5 Gew.-%, bevorzugt kleiner als 2,6 Gew.-% und insbesondere kleiner als 2,2 Gew.-% aufweisen. Ihr Gehalt an Eisen(III)oxid Fe₂O₃ sollte kleiner als 2 Gew.-% sein, bevorzugt kleiner als 1,5 Gew.-% und insbesondere kleiner als 1,2 Gew.-% sein. Ihr Gehalt an der Summe von Erdalkalimetalloxiden (Magnesiumoxid MgO + Kalziumoxid CaO) sollte kleiner als 1,8 Gew.-%, bevorzugt kleiner als 1,4 Gew.-% und insbesondere kleiner als 1,0 Gew.-% sein.

Nicht kalzinierte Diatomeenerde ist vor dem Vermischen mit den Aktivkomponenten nicht bei Temperaturen oberhalb von 500°C, bevorzugt nicht oberhalb von 400°C und insbesondere nicht oberhalb von 320°C behandelt worden. Charakteristisches Merkmal der nicht kalzinierten Diatomeenerde ist, dass das Material im Wesentlichen amorph ist, d.h. der Gehalt an Cristobalit bei < 5 Gew.-%, bevorzugt < 2 Gew.-% und besonders bevorzugt < 1 Gew.-% liegt, bestimmt mittels Röntgenbeugungsanalyse.

Selbstverständlich kann die natürlich vorkommende, nicht kalzinierte Diatomeenerde abgesehen von der Kalzination nach dem Abbau und vor der Verwendung als Trägermaterial unterschiedlichen Aufbearbeitungsschritten unterworfen worden sein, beispielsweise Schlämmen, Waschen, Extraktion, Trocknen und/oder Sichten.

Die Herstellung von erfindungsgemäßen Katalysatorformkörpern erfolgt durch Vermischen von wässrigen Lösungen oder von Suspensionen der verschiedenen Aktivkomponenten, beispielsweise entsprechender Vanadiumverbindungen (V₂O₅, Ammoniumpolyvanadat, Ammoniummetavanadat, Alkalimetallvanadate bzw. Vanadylsulfate) mit Alkalimetallsalzen (Nitraten, Carbonaten, Oxiden, Hydroxiden, Sulfaten), gegebenenfalls mit Schwefelsäure und sonstigen Komponenten, welche als Porenbildner bzw. Schmiermittel fungieren können wie beispielsweise Schwefel, Stärke oder Graphit, mit dem Trägermaterial. Der Mischvorgang ist nicht weiter eingeschränkt und kann beispielsweise in einem Kneter, einem Schneckenmischer, einem Schaufelmischer oder einem sogenannten "Mix Muller", in dem die Komponenten durch rotierende Räder und Schaber vermischt werden, erfolgen.

Die daraus resultierende Masse wird im nächsten Schritt zu den erfindungsgemäßen Formkörpern extrudiert, getrocknet und kalziniert. Die Art des Extruders ist hierbei nicht weiter eingeschränkt. Es können beispielsweise Kolbenextruder, Schneckenextruder, Kaskadenextruder oder Planetwalzenextruder eingesetzt werden. Bevorzugt ist die Verwendung von Schneckenextrudern, insbesondere von Schneckenextrudern mit einer oder zwei Schneckenwellen. Die Schneckenwellen können hinsichtlich ihrer Geometrie, beispielsweise hinsichtlich ihres Nenndurchmessers, der Gangtiefe und/oder der Steigung, dahingehend optimiert werden, dass sie möglichst gleichmäßige Extrudate erzeugen. Das Material der Schneckenwelle oder ihrer Oberfläche, wie auch das Material des Schneckenzylinders oder seiner Oberfläche und des Extrusionswerkzeugs oder seiner Oberfläche kann beispielsweise dahingehend optimiert werden, dass es eine möglichst große Beständigkeit gegenüber der zu extrudierenden Masse aufweist. Auf Grund des niedrigen pH-Wertes der Masse sind insbesondere korrosions- und säurebeständige Materialien bevorzugt. Die zu verarbeitenden Materialien können der Schnecke kontinuierlich oder diskontinuierlich über einen Trichter von oben zugeführt werden. Eine reproduzierbare Dosierung und Füllhöhe im Trichter kann zu verbesserter Qualität der Extrusion führen.

Die Art der Extrusion ist ebenfalls nicht weiter eingeschränkt. Beispielsweise kann eine Kalt-, Warm- oder Heißextrusion verwendet werden. Die zu extrudierende Masse hat beim Eingang in den Extruder typischerweise eine Temperatur von 10 bis 90°C. Das Extrudergehäuse mit dem Schneckenzylinder kann mit einem Kühlmedium, beispielsweise Wasser, gekühlt werden, um zu verhindern, dass Bauteile durch zu hohe Temperaturen deformiert werden. In einem solchen Falle beträgt die Temperatur des Kühlmediums im Vorlauf typischerweise 0 bis 80°C. Die Temperatur des Extrudats direkt nach Verlassen des Extruders beträgt typischerweise 10 bis 90°C. Die Schneckendrehzahl beträgt typischerweise 1 bis 100 Umdrehungen pro Minute, oft 2 bis 30 Umdrehungen pro Minute. Der Druck im Extruder vor dem Extrusionswerkzeug beträgt typischerweise 20 bis 500 bar. Das Drehmoment, welches die Schnecke überträgt, beträgt typischerweise 50 bis 5000 Nm.

Extrusionswerkzeuge können aus einem oder mehreren Bauteilen bestehen. In einer bevorzugten Form bestehen sie aus einer Matrize und Einsatzstiften, wobei die Matrize weitestgehend die Form, Größe und Position der äußeren Ausbuchtungen festlegt und die Einsatzstifte die Form, Größe und Position der vier äußeren und des zentralen Durchgangs festlegen. Die Einsatzstifte können in die Matrize eingesetzt werden. Die translatorische und rotatorische Zentrierung der Einsatzstifte in der Matrize kann durch eine geeignete Bauart von Matrize und Einsatzstiften erreicht werden, beispielsweise durch eine Nut in einem Bauteil und eine Feder im anderen Bauteil. Die Zentrierung kann auch mit Hilfe eines zusätzlichen Zentrierwerkzeugs geschehen. Bevorzugt werden die Matrizen mittels 3D-Metallpulverdruck hergestellt.

Eine mittels 3D-Metalldruck herstellbare Extrusionsmatrize ist in den Figuren 6 und 7 gezeigt.

Besteht das Extrusionswerkzeug aus mehreren Bauteilen, so können die Bauteile aus dem gleichen oder aus unterschiedlichen Materialien bestehen. In einer bevorzugten Ausführungsform besteht die Matrize aus einem möglichst säurebeständigen Kunststoff, beispielsweise PTFE und die Einsatzstifte aus einem säurebeständigen Edelstahl. Die Matrizen können kostengünstig beispielsweise durch Spritzguss hergestellt werden.

Die Formkörper werden nach der Extrusion im Allgemeinen einem Trocknungsschritt unterzogen. Hierbei ist die Art des Ofens nicht weiter eingeschränkt. Es können beispielsweise stationäre Umluftöfen, Drehrohröfen oder Bandöfen eingesetzt werden. Die Dauer der Trocknung beträgt im Allgemeinen 0,5 bis 20 Stunden und die Temperatur beträgt im Allgemeinen 50 bis 200°C.

Die Formkörper werden nach der Trocknung im Allgemeinen einem Kalznierschritt unterzogen. Hierbei ist die Art des Ofens nicht weiter eingeschränkt. Es können beispielsweise stationäre Umluftöfen, Drehrohröfen oder Bandöfen eingesetzt werden. Die Dauer des Kalzinierens beträgt im Allgemeinen 0,5 bis 20 Stunden und die Temperatur beträgt im Allgemeinen 200 bis 800°C.

Es kann nach der Kalzination oder bereits zu anderen Zeitpunkten im Herstellverfahren des Katalysators vorteilhaft sein, die Formkörper bezüglich Ihrer Dimensionen zu sortieren und nur eine geeignete Größenfraktion zu nutzen. Eine solche Sortierung kann beispielsweise über geeignete Siebe erfolgen. Formkörper, die größer oder kleiner als die gewünschte Dimension sind, können beispielsweise an geeigneten Stellen dem Prozess als Rückgut zurückgeführt werden. Es kann vorteilhaft sein, dieses Rückgut vor der Rückführung einer oder mehreren weiteren Verfahrensstufen zu unterziehen, beispielsweise einer Mahlung.

Gegenstand der vorliegenden Erfindung ist auch die Verwendung von erfindungsgemäßen Katalysatorformkörpern zur Oxidation von SO₂ zu **SO₃.**

Gegenstand der vorliegenden Erfindung ist weiterhin ein Verfahren zur Oxidation von SO₂ zu SO₃, bei dem ein Sauerstoff und Schwefeldioxid enthaltendes Gasgemisch bei einer Temperatur im Bereich von 340 bis 680°C mit einer Schüttung aus den erfindungsgemäßen Katalysatorformkörpern in Kontakt gebracht wird.

Als Reaktoren werden typischerweise Hordenreaktoren eingesetzt (siehe beispielsweise" H. Müller, Sulfuric Acid and Sulfur Trioxide in Ullmann's Encyclopedia of Industrial Chemistry, Wiley-VCH, 2012"; DOI: 10.1002/14356007.a25_635). In diesen Hordenreaktoren befinden sich mehrere Reaktionshorden, in denen SO₂ mit Katalysatorformkörpern in Kontakt gebracht wird. Typischerweise enthält der Reaktor zwischen 1 und 6, zumeist zwischen 3 und 5 Horden. Die Hordenreaktoren verhalten sich im Allgemeinen näherungsweise adiabat, das heißt, dass die bei der Oxidation von SO₂ zu SO₃ freiwerdende Wärme zu einem großen Teil das Reaktionsgas erhitzt. Die exotherme Oxidation von SO₂ zu SO₃ wird durch das thermodynamische Gleichgewicht limitiert, welches sich mit zunehmender Temperatur in Richtung der Edukte verschiebt. Nach dem Durchgang durch eine Horde wird daher das Reaktionsgas, beispielsweise in geeigneten Wärmetauschern, abgekühlt, bevor es der nächsten Horde zugeführt wird. Weiterhin gibt es Prozesse, in denen zwischen zwei Horden das gebildete SO₃, beispielsweise durch Absorption in konzentrierter Schwefelsäure, weitgehend aus dem Reaktionsgas entfernt wird, um den Umsatz von verbleibendem SO₂ in den nachfolgenden Horden zu erhöhen.

Die Konzentration an SO₂ im Reaktionsgas vor Eintritt in die erste Horde beträgt im Allgemeinen 2 bis 20 Vol.-%, je nach SO₂-Quelle beträgt sie typischerweise zwischen 5 und 15 Vol.-%. Die Konzentration an O₂ im Reaktionsgas vor Eintritt in die erste Horde beträgt ebenfalls im Allgemeinen zwischen 2 - 20 Vol.-%, je nach SO₂-Quelle liegt sie typischer Weise zwischen 5 und 15 Vol.-%. Die Volumenströme betragen im Allgemeinen 10 000 bis 500 000 Nm³/h, typischer Weise 30 000 bis 350 000 Nm³/h. Der Durchmesser der Reaktoren beträgt typischerweise 2 bis 15 m, normalerweise 3 bis10 m. Das Volumen der katalytischen Schüttung pro Horde beträgt im Allgemeinen 10 bis 500 m³, üblicher Weise 20 bis 350 m³. Die Höhe der katalytischen Schüttung pro Horde beträgt im Allgemeinen 0,3 bis 3 m, typischer Weise 0,5 bis 2,5 m. Die Gasbelastung in Nm³/h, bezogen auf das Katalysatorvolumen in m³ (GHSV), beträgt im Allgemeinen 100 bis 5000 h⁻¹, üblicher Weise 500 bis 2500 h⁻¹. Die Strömung ist typischerweise im laminaren Bereich, die Reynoldszahl der Strömung in der Horde beträgt im Allgemeinen 10 bis 1000, typischer Weise 30 bis 500. Der Druckverlust über die Schüttung einer Horde beträgt im Allgemeinen 2 bis 100 mbar, typischerweise 5 bis 50 mbar.

Es ist von wirtschaftlichem Vorteil, wenn der Druckverlust über den Prozess, insbesondere über Reaktor, Wärmetauscher und gegebenenfalls Absorptionsturm gering ist, um geringe Kosten für die Verdichtung des Reaktionsgases zu haben und um die Druckfestigkeitsanforderungen der Bauteile zu minimieren. Eine katalytische Schüttung, welche sich durch einen niedrigen Druckverlust und eine hohe Aktivität auszeichnet, ist hierbei vorteilhaft.

Die Erfindung wird durch die nachstehenden Beispiele näher erläutert.

### Beispiele

### Beispiel 1 Herstellung der Katalysatormasse

0,8991 kg (30 Gew.-% bezogen auf die Mischung der Diatomeenerden) einer Diatomeenerde des Typs MN der Firma EP Minerals, 1,4985 kg (50 Gew.-% bezogen auf die Mischung der Diatomeenerden) einer Diatomeenerde des Typs Masis der Firma Diatomite SP CJSC und 0,5994 kg (20 Gew.-% bezogen auf die Mischung der Diatomeenerden) einer Diatomeenerde des Typs Diatomite 1 der Firma Mineral Resources Ltd. werden 30 Minuten mit 45 Umdrehungen pro Minute in einem Röhnradmischer (Firma Engelsmann, Behältervolumen 32 Liter) gemischt. In einem Mix-Muller (Firma Simpson, Baujahr 2007, Behältervolumen 30 Liter) wird die Mischung der Diatomeenerden vorgelegt und 2 Minuten bei 33 Umdrehungen pro Minute gekollert. Daraufhin wird über einen Zeitraum von 2 Minuten eine erste Lösung bestehend aus 1,3706 kg wässriger KOH-Lösung (47,7 Gew.-%) und 0,532 kg Ammoniumpolyvanadat (Firma Treibacher) zugegeben und 1 Minute weiter gekollert. Über einen Zeitraum von 2 Minuten wird 2,1025 kg 48-prozentige Schwefelsäure zugegeben und eine weitere Minute bei 33 Umdrehungen pro Minute gekollert. Als nächstes werden 0,3 kg K₂SO₄ (Firma K+S Kali GmbH) in 1,587 kg einer 50-prozentigen wässrigen Cs₂SO₄-Lösung gegeben, über einen Zeitraum von 2 Minuten in den Mix-Muller gegeben und 1 weitere Minute bei 33 Umdrehungen pro Minute gekollert und dann unter fortgesetzten Kollern 180 g einer Stärkelösung (7,39 Gew.-% Kartoffelstärke in VE-Wasser) zugegeben. Die erhaltene Masse wird weiterhin bei 33 Umdrehungen pro Minute weitergekollert, bis die gesamte Kollerzeit ab Zugabe der Diatomeenerde insgesamt 15 Minuten beträgt.

### Beispiel 2 Herstellung von Katalysatorformkörpern

Die Geometrie des Formkörpers wird durch eine Matrize festgelegt, durch die die zu extrudierende Masse unter hohem Druck gefördert wird. Zur Extrusion des Formkörpers wird die in den Figuren 6 und 7 dargestellte Extrusionsmatrize verwendet. Der extrudierte Formkörper weist die Geometrie gemäß Figur 3 auf.

Hierbei kommt ein Schneckenextruder mit einer Schnecke zum Einsatz. Die Feststoffzugabe in die Schnecke erfolgt von oben. Der Extruder wird mit Wasser gekühlt. Die Drehgeschwindigkeit der Förderschnecke im Extruder beträgt 10 Umdrehungen pro Minute. Die Temperatur des Feststoffs bei der Zugabe und der Formkörper beim Austritt aus dem Extruder beträgt um die 50°C. Der Durchsatz durch einen Extruder beträgt 6000 kg pro Tag. Unter anderem weil die Fördergeschwindigkeit der Stränge nicht konstant ist, erhält man keine einheitliche Länge, sondern vielmehr eine Längenverteilung. Weiterhin ist die durchschnittliche Länge von der Geometrie der Matrize abhängig. Die Formkörper werden anschließend für 2 Stunden bei 120°C getrocknet und für 3 Stunden bei 475°C kalziniert. Über Siebvorrichtungen werden zu große und zu kleine Formkörper entfernt.

Der extrudierte Formkörper ist in Figur 8 wiedergegeben.

## Patentansprüche

1. Katalysator-, Katalysatorträger- oder Adsorbensformkörper in Form eines Multiloben mit n hohlzylindrischen Ausbuchtungen und a longitudinalen Durchgängen, wobei a = bn +1 ist und b = 1,5 bis 2 ist.

2. Formkörper nach Anspruch 1, **dadurch gekennzeichnet, dass** n = 6 oder 8 ist.

3. Formkörper nach Anspruch 1 oder 2, **dadurch gekennzeichnet, dass** b = 2 ist.

4. Formkörper nach einem der Ansprüche 1 bis 3, **dadurch gekennzeichnet, dass** er einen zentralen Durchgang, auf einer Kreislinie mit dem Durchmesser x1 liegenden innere Durchgänge und auf einer Kreislinie mit dem Durchmesser x2 liegende äußere Durchgänge aufweist.

5. Formkörper nach Anspruch 4, **dadurch gekennzeichnet, dass** die Wandstärke der zylindrischen Ausbuchtungen das 0,4- bis 1,2-fache des Durchmessers der äußeren Durchgänge ist.

6. Formkörper nach Anspruch 4 oder 5, **dadurch gekennzeichnet, dass** die inneren Durchgänge jeweils eine kleinere Fläche als die äußeren Durchgänge aufweisen.

7. Formkörper nach Anspruch 4 oder 5, **dadurch gekennzeichnet, dass** die inneren Durchgänge jeweils eine größere Fläche als die äußeren Durchgänge aufweisen.

8. Formkörper nach einem der Ansprüche 4 bis 7, **dadurch gekennzeichnet, dass** die äußeren Durchgänge kreisrund sind.

9. Formkörper nach einem der Ansprüche 4 bis 8, **dadurch gekennzeichnet, dass** die inneren Durchgänge kreisrund oder elliptisch sind.

10. Formkörper nach einem der Ansprüche 4 bis 9, **dadurch gekennzeichnet, dass** der zentrale Durchgang kreisrund oder polygonal ist.

11. Formkörper nach Anspruch 4 bis 10, **dadurch gekennzeichnet, dass** er n innere und n äußere Durchgänge aufweist und eine n-zählige Rotationssymmetrie aufweist.

12. Formkörper nach einem der Ansprüche 1 bis 11, **dadurch gekennzeichnet, dass** das Verhältnis des Durchmessers des Formkörpers zur Höhe des Formkörpers 0,4 bis 0,75 beträgt.

13. Formkörper nach einem der Ansprüche 1 bis 12, **dadurch gekennzeichnet, dass** der diagonale Durchmesser des Formkörpers 5 bis 80 mm beträgt.

14. Formkörper nach einem der Ansprüche 1 bis 13, **dadurch gekennzeichnet, dass** er Vanadium, mindestens ein Alkalimetall und Sulfat auf einem Silikat-Trägermaterial enthält.

15. Formkörper nach einem der Ansprüche 1 bis 14, erhältlich durch Extrusion einer Katalysatorvorläufermasse durch ein Extrusionswerkzeug, das die Geometrie des Katalysatorformkörperquerschnitts abbildet, zu Katalysatorvorläufer-Formkörpern, Trocknen und Kalzinieren derselben.

16. Verwendung von Katalysatorformkörpern, wie in einem der Ansprüche 1 bis 15 definiert, zur Oxidation von SO₂ zu SO₃.

17. Verfahren zur Oxidation von SO₂ zu SO₃, bei dem ein Sauerstoff und Schwefeldioxid enthaltendes Gasgemisch bei einer Temperatur im Bereich von 340 bis 680°C mit einer Schüttung aus Katalysatorformkörpern gemäß einem der Ansprüche 1 bis 16 in Kontakt gebracht wird.
